# EUROPEAN PATENT APPLICATION

(11) **EP 2 749 472 A2**
(43) Date of publication of application: **02.07.2014**
(21) Application number: 13153006.5
(22) Date of filing: 29.01.2013
(51) Int. Cl.: B62B 3/02

(54) **Beach cart**

(30) Priority: 25.12.2012 CN 201210572499; 25.12.2012 CN 201220730666 U
(71) Applicant: Zhejiang Hengfeng Top Leisure Co., Ltd., Zhejiang 313200 (CN)
(72) Inventor: Yang, Baoqing, Zhejiang 313200 (CN)
(74) Representative: Witte, Weller & Partner Patentanwälte mbB

(57) **Abstract**

The present application provides a beach cart including a cart frame (1), a handlebar (2) and wheels (3). The cart frame includes a bottom frame (10), a front frame (11), a rear frame (12) and two side frames (13), and two side frames are provided symmetrically relative to the bottom frame, each includes at least two sets of X-shaped assemblies (130) which are arranged symmetrically and side by side, and a plurality of articulated joints for connecting two adjacent X-shaped assemblies at the same side. The X-shaped assemblies (130) each includes a first inclined beam (132) and a second inclined beam (133) which are articulated via an articulated shaft arranged at middle portions of the first inclined beam and the second inclined beam. The beach cart provided by the present application has a smaller volume when being folded and has a simple connection structure so as to reduce the possibility of occurrence of failures during use.

## Description

### FIELD OF THE INVENTION

The present application relates to the field of structural design of a cart, and in particular to a beach cart.

### BACKGROUND OF THE INVENTION

A beach cart is a tool for transporting goods on the beach. In the prior art, generally, a beach cart is not foldable or has a larger volume when being folded. Specifically, in order to reduce the volume of the beach cart being folded, the specific structure of a beach cart in the prior art is as follows.

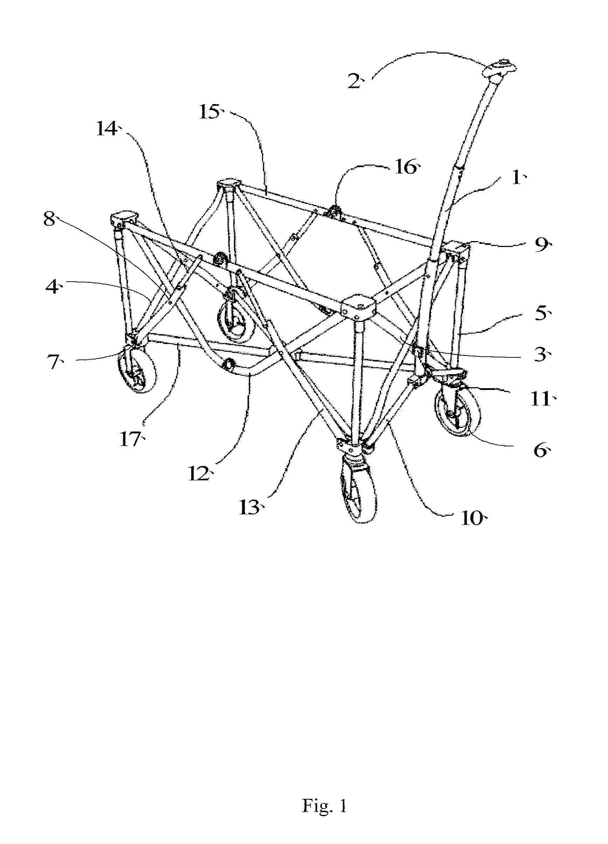

Figure 1 shows a foldable beach cart which includes a cart frame, a pull handle 1' and four wheels 6' fixed at a bottom of the cart frame. The cart frame is a foldable frame structure formed by articulated connecting rods, and has four telescopic vertical supporting legs 5', wherein each of the vertical supporting legs 5' includes a top portion fixedly provided with an upper bracket 9' and a lower end fixedly provided with a lower bracket 7'. Four lower brackets 7 are connected by a cruciform bottom frame, the bottom frame includes a middle bracket 18' and four bottom beams 17', and an end portion of each bottom beams 17' is articulated to the middle bracket 18'. An X-shaped crossed front frame 3' is articulated between two vertical supporting legs 5' located at a front side of the cart frame, and an X-shaped crossed rear frame 4' is articulated between two vertical supporting legs 5' located at a rear side of the cart frame. The upper brackets 9' and the lower brackets 7', at the left side and the right side of the cart frame, are respectively connected by two four-bar linkage mechanisms 8'. Each of the four-bar linkage mechanisms 8' includes an upper cross beam 15' articulated to the upper bracket 9,' an inclined beam 13' articulated to the upper bracket 9', an inclined supporting beam 12' articulated to the lower bracket 7', and a short beam 14' connected an end portion of the inclined supporting beam 12' to a middle part of the upper cross beam 15', and the inclined supporting beam 12' and the inclined beam 13' are articulated to form an X shape. In the two four-bar linkage mechanisms 8' at the same side of the cart frame, two upper cross beams 15' are articulated via an articulated joint 16', and two inclined beams 13' are also articulated via an articulated joint 16'. A retaining member 11' is fixed at a middle portion of the front frame 3'. Two pull-handle connecting rods 10' which are joined end to end are connected between the lower brackets 7' at the lower ends of the vertical supporting legs 5' located at the front side of the cart frame, and a joined portion of the pull-handle connecting rods 10' is articulated to a lower end of the pull handle 1'. The pull handle 1' is a telescopic pipe having multiple sections, and a transverse handle 2' is fixed at an end portion of the telescopic pipe at the top end.

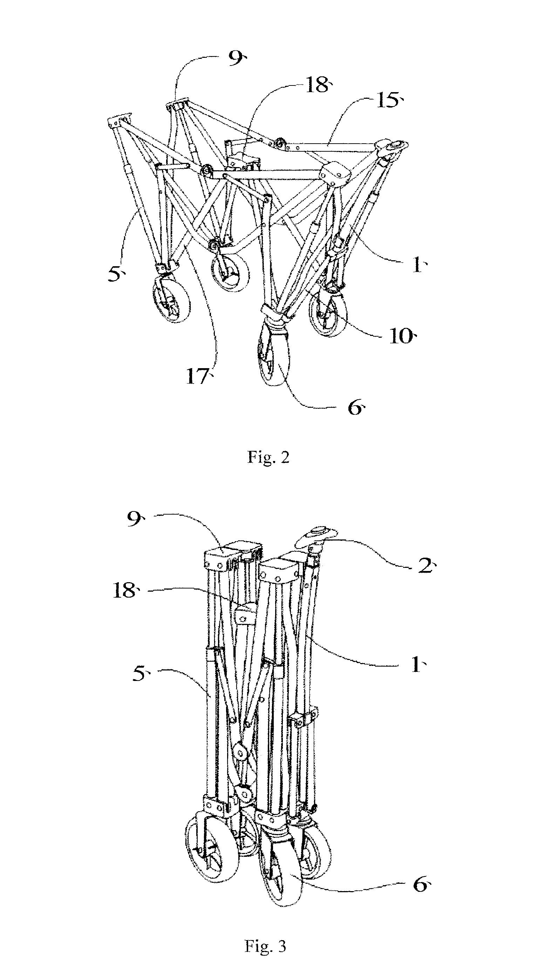

When the above described beach cart is unfolded, the upper cross beams 15' are in a horizontal state, the bottom frame has a planar structure, and meanwhile, the short beams 14' and the inclined supporting beams 12' are in a four-point supporting state. When folding the beach cart, the middle bracket 18' is lifted upwards, and the articulated joints 16' at the articulated portions of the upper cross beams 15' are pressed downwards simultaneously, at this time, the vertical supporting legs 5' extend, and the inclined beams 13' are rotated such that the short beams 14' and the inclined supporting beams 12' left a dead center position. As shown in Figure 2, the middle bracket 18' is lifted up continuously until four vertical supporting legs 5' are folded into a middle position, and then the pull handle 1' is rotated about an articulated portion at its lower end, and is shorten at the same time and then is clamped into the retaining member 11', thereby completing the folding process, and the folded state is shown in Figure 3.

The above described beach cart has advantages of having a large loading space when being unfolded and having a small volume when being folded. However, such beach cart has a large number of parts and articulated points, and has a relatively complicated structure, which may easily cause failures of the beach cart.

Therefore, a technical problem to be solved presently by those skilled in the art is to provide a beach cart which has a smaller volume when being folded and a simple connection structure so as to reduce the possibility of occurrence of failures during use.

### SUMMARY OF THE INVENTION

In view of this, the present application provides a beach cart which has a smaller volume when being folded and has a simple connection structure so as to reduce the possibility of occurrence of failures during use.

In order to achieve the above object, the present application provides the following technical solutions.

A beach cart includes a cart frame, a handlebar arranged in front of the cart frame, and wheels fixed at a bottom portion of the cart frame, wherein the cart frame includes a bottom frame, a front frame arranged in front of the bottom frame, a rear frame arranged at a rear of the bottom frame, and two side frames respectively arranged at two sides of the bottom frame, wherein,

the two side frames are provided symmetrically relative to the bottom frame, and each includes at least two sets of X-shaped assemblies which are arranged symmetrically and side by side, and a plurality of articulated joints for connecting two adjacent X-shaped assemblies at the same side; and the X-shaped assemblies each includes a first inclined beam and a second inclined beam which are articulated via an articulated shaft arranged at middle portions of the first inclined beam and the second inclined beam;

one end of the first inclined beam is articulated to a first inclined beam of an adjacent X-shaped assembly via the articulated joint, and the other end of the first inclined beam is articulated to the front frame or the rear frame via a lower bracket of the bottom frame, or is articulated to a first inclined beam of another adjacent X-shaped assembly via the articulated joint; and

one end of the second inclined beam is articulated to a second inclined beam of the adjacent X-shaped assembly via the articulated joint, and the other end of the second inclined beam is articulated to the front frame or the rear frame via an upper bracket of the bottom frame, or is articulated to a second inclined beam of another adjacent X-shaped assembly via the articulated joint.

Preferably, in the above described beach cart, each of the side frames includes a front X-shaped assembly, a rear X-shaped assembly and two of the articulated joints, and the front X-shaped assembly is connected to the rear X-shaped assembly via the articulated joints.

Preferably, in the above described beach cart, each of the side frames includes a front X-shaped assembly, a middle X-shaped assembly, a rear X-shaped assembly and four of the articulated joints, and the front X-shaped assembly and the rear X-shaped assembly are respectively arranged at two sides of the middle X-shaped assembly via the articulated joints.

Preferably, in the above described beach cart, the first inclined beam and the second inclined beam are hollow aluminum pipes or hollow iron pipes.

Preferably, the above described beach cart further includes:

a first connecting member fixedly connected to the lower bracket;

a second connecting member fixedly connected to the upper bracket;

a third connecting member fixedly connected to a vertical supporting leg of the bottom frame;

a vertical beam, and one end of the vertical beam is articulated to the third connecting member, and the other end of the vertical beam is connected to a rear wheel of the wheels; and

a fourth connecting member, which is slidably sleeved on the vertical beam, and is configured to connect to the first connecting member or the second connecting member so as to fix the rear wheel, when the vertical beam is clamped into the first connecting member or the second connecting member.

Preferably, in the above described beach cart, the handlebar includes a first pull rod articulated to the cart frame and provided, at a head portion, with a locating hole, a combined retaining member arranged on the head portion of the first pull rod, a second pull rod sleeved in the first pull rod and provided at a tail with a locating hole, and a handgrip arranged at a head portion of the second pull rod;

the combined retaining member includes a plastic member sleeved on the head portion of the first pull rod, and a double-headed elastic pin arranged in the second pull rod;

keys are symmetrically provided on the plastic member, and each of the keys is provided, at an inner surface, with a boss corresponding to a position of the locating hole; and

the double-headed elastic pin is provided with a bolt portion which is corresponding to the position of the locating hole and has a diameter greater than a wall thickness of the second pull rod.

Preferably, in the above described beach cart, the handlebar includes a first pull rod articulated to the cart frame, a second pull rod articulated on a side at a head portion of the first pull rod, a connecting block rotatably sleeved on the second pull rod, and a handgrip arranged at a head portion of the second pull rod; and

the connecting block is provided with a through hole configured for the second pull rod to pass through, a blind hole configured to be covered on the head portion of the first pull rod, and an elastic retaining groove configured to be clamped on the first pull rod.

Preferably, in the above described beach cart, the front frame is provided with a front wheel frame fixing member, and the front wheel frame fixing member is of an inverted T-shaped structure, includes an upper end fixed to an articulated portion of the front frame, and a lower portion articulated to the handlebar, and two ends of the lower portion are connected to two front wheels.

Preferably, in the above described beach cart, locking screws are arranged at the two ends of the lower portion of the front wheel frame fixing member for connecting to two first front wheel frames.

Preferably, in the above described beach cart, a front wheel of the wheels includes:

a second front wheel frame which is connected to the front wheel, includes a top portion provided with a chamfer and a lower portion provided with a locating groove;

a front wheel connecting member arranged on the lower bracket;

a button arranged on the front wheel connecting member for cooperating with the locating groove so as to fix and release the front wheel; and

a torsion spring arranged on the front wheel connecting member for resetting the button.

A beach cart according to the present application includes a cart frame, a handlebar arranged in front of the cart frame, and wheels fixed at a bottom portion of the cart frame, wherein the cart frame includes a bottom frame, a front frame arranged in front of the bottom frame, a rear frame arranged at a rear of the bottom frame, and two side frames respectively arranged at two sides of the bottom frame. Wherein, each of the side frames has a symmetrical structure having at least two sets of X-shaped assemblies arranged side by side and a plurality of articulated joints connected to the X-shaped assemblies; and the X-shaped assemblies each includes a first inclined beam and a second inclined beam which are articulated via an articulated shaft arranged at middle portions of the first inclined beam and the second inclined beam. One end of the first inclined beam is articulated to a first inclined beam of another X-shaped assembly via the articulated joint, and the other end of the first inclined beam is articulated to the front frame or the rear frame, or is articulated to a first inclined beam of another X-shaped assembly via the articulated joint. One end of the second inclined beam is articulated to a second inclined beam of another X-shaped assembly via the articulated joint, and the other end of the second inclined beam is articulated to the front frame or the rear frame, or is articulated to a second inclined beam of another X-shaped assembly via the articulated joint.

Compared with the conventional beach cart, in the beach cart according to the present application, inclined supporting beams, short beams and upper cross beams are omitted, and the X-shaped assembly is only formed by inclined beams articulated with each other, such that the types and number of parts are reduced, thereby simplifying the structure of the beach cart and further reducing the probability of occurrence of failures of the beach cart.

### BRIEF DESCRIPTION OF THE DRAWINGS

For clearly illustrating embodiments of the present application or the technical solutions in the prior art, drawings required to describe the embodiments or the prior art will be briefly described hereinafter. Apparently, the drawings in the following description are only several embodiments of the present application, and for the person skilled in the art, other drawings may be obtained based on these drawings without any creative efforts.

Figure 1 is a structural schematic view of a conventional beach cart in an unfolded state;

Figure 2 is a schematic view of the conventional beach cart in a folding process;

Figure 3 is a structural schematic view of the beach cart in a folded state;

Figure 4 is a structural schematic view of a beach cart according to an embodiment of the present application;

Figure 5 is a side view of the beach cart according to the embodiment of the present application;

Figure 6 is a schematic view of the beach cart in a folding process according to the embodiment of the present application;

Figure 7 is a structural schematic view of the beach cart in a folded state according to the embodiment of the present application;

Figure 8 is a structural schematic view of a beach cart according to an embodiment of the present application;

Figure 9 is a schematic view of the beach cart in a folding process;

Figure 10 is a structural schematic view of the beach cart in a folded state;

Figure 11 is a structural schematic view of a handlebar of the beach cart;

Figure 12 is an exploded view of Figure 11;

Figure 13 is a structural schematic view of a handlebar of the beach cart according to another embodiment of the present application;

Figure 14 is a schematic view of the handlebar in a folding process;

Figure 15 is a structural schematic view of the handlebar in a folded state;

Figure 16 is a partial structural schematic view of a connection portion on the handlebar of the beach cart;

Figure 17 is a structural schematic view of front wheels of a beach cart according to an embodiment of the present application;

Figure 18 is a partial exploded view showing a connection relationship of the structure of the front wheel; and

Figure 19 is a partial exploded view showing a connection relationship of the structure of a front wheel of a beach cart according to another embodiment of the present application.

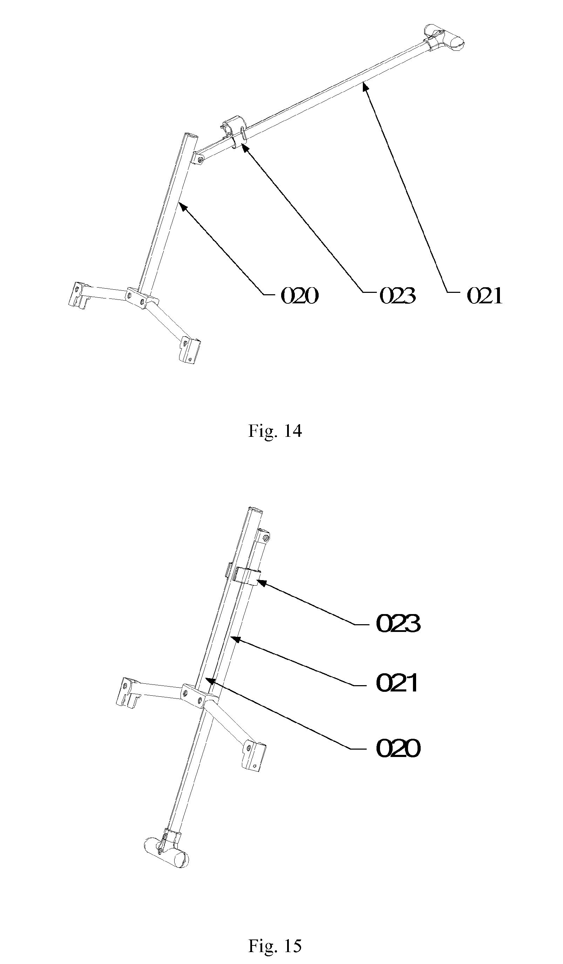

**Reference numerals in Figures 1 to 19:**

| | |
|---|---|
| 1' pull handle, | 2' handle, |
| 3' front frame, | 4' rear frame, |
| 5' vertical supporting leg, | 6' wheel, |
| 7' lower bracket, | 8' four-bar linkage mechanism, |
| 9' upper bracket, | 10' pull-handle connecting rod, |
| 11' retaining member, | 12' inclined supporting beam, |
| 13' inclined beam, | 14' short beam, |
| 15' upper cross beam, | 16' articulated joint, |
| 17' bottom beam, and | 18' middle bracket; |

| | |
|---|---|
| 1 cart frame, | 2 handlebar, |
| 3 wheel, | 4 first connecting member, |
| 5 second connecting member, | 6 third connecting member, |
| 7 vertical beam, | 8 fourth connecting member, |
| 9 front wheel frame fixing member, | 91 locking screw, |
| 92 first front wheel frame, | 09 front wheel connecting member, |
| 091 locating groove, | 092 second front wheel frame, |
| 093 button, | 094 torsion spring, |
| 10 bottom frame, | 11 front frame, |
| 12 rear frame, | 13 side frame, |
| 100 middle bracket, | 101 bottom beam, |
| 102 lower bracket, | 103 vertical supporting leg, |
| 104 upper bracket, | 110 connecting rod, |
| 130 X-shaped assembly, | 131 articulated joint, |
| 132 first inclined beam, | 133 second inclined beam, |
| 20 first pull rod, | 21 combined retaining member, |
| 22 second pull rod, | 23 handgrip, |
| 210 plastic member, | 211 double-headed elastic pin, |
| 020 first pull rod, | 021 second pull rod, |
| 022 handgrip, | 023 connecting block, |
| 0230 through hole, | 0231 blind hole, and |
| 0232 elastic retaining groove. | |

### DETAILED DESCRIPTION OF THE INVENTION

Embodiments of the present application disclose a beach cart so as to realize the objects of simplifying the structure of the beach cart and reducing failures.

The technical solutions in the embodiments of the present application will be described clearly and completely hereinafter in conjunction with the drawings in the embodiments of the present application. Apparently, the described embodiments are only a part of the embodiments of the present application, rather than all embodiments. Based on the embodiments in the present application, all of other embodiments, made by the person skilled in the art without any creative efforts, fall into the protection scope of the present application.

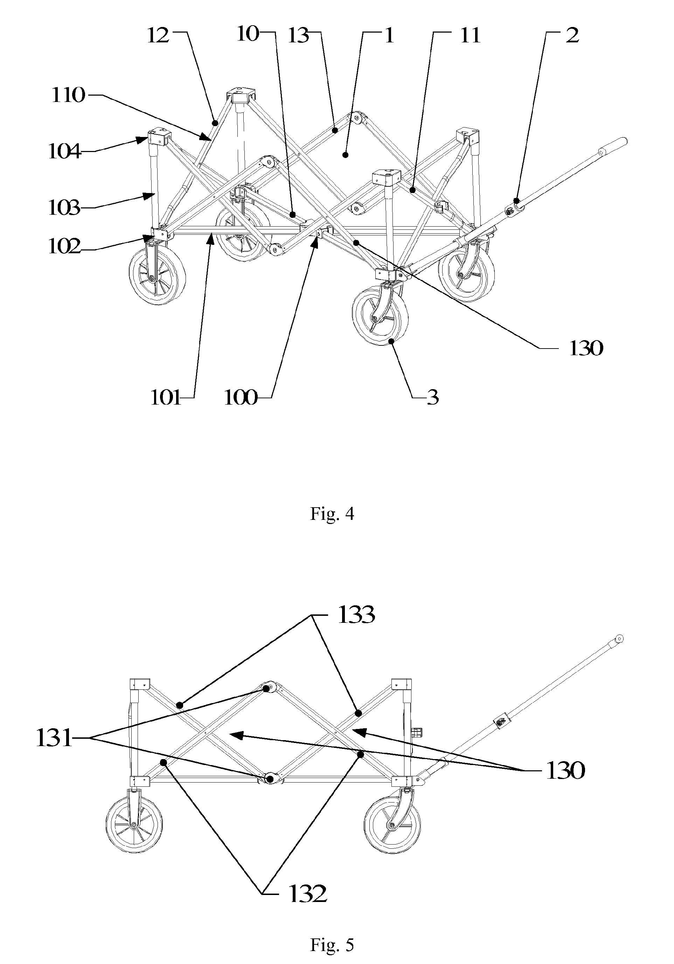

Referring to Figure 4, the beach cart according to an embodiment of the present application includes a cart frame 1, a handlebar 2 arranged in front of the cart frame 1, and wheels 3 fixed at a bottom portion of the cart frame 1.

The cart frame 1 further includes a bottom frame 10, a front frame 11 arranged in front of the bottom frame 10, a rear frame 12 arranged at a rear of the bottom frame 10, and two side frames 13 respectively arranged at a left side and a right side of the bottom frame 10.

The bottom frame 10 includes a middle bracket 100, four bottom beams 101, a lower bracket 102 arranged at one end of each bottom beam 101, a vertical supporting leg 103 arranged on each lower bracket 102, and an upper bracket 104 arranged on a top portion of each vertical supporting leg 103. The four bottom beams 101 are symmetrically articulated to the middle bracket 100 via their ends which are not articulated to lower brackets 102. The wheels 3 are fixed at bottoms of the lower brackets 102, and the vertical supporting legs 103 are arranged vertically.

The front frame 11 and the rear frame 12 both are formed by two connecting rods 110 which are crossed in an X-shape and articulated. One end of each of the connecting rods 110 is articulated to one upper bracket 104, and the other end thereof is articulated to the lower bracket 102 located at a diagonal position of the above upper bracket 104.

Each side frame 13 includes two X-shaped assemblies 130 arranged side by side, and further includes two articulated joints 131 connected to the X assemblies.

Each X-shaped assembly 130 includes a first inclined beam 132 and a second inclined beam 133 which are articulated via an articulated shaft arranged at a middle of a cart body, as shown in Figure 5. The first inclined beam 132 in a front X-shaped assembly is connected to the first inclined beam in a rear X-shaped assembly via the articulated joint 131, and the second inclined beam 132 in the front X-shaped assembly is also connected to the second inclined beam in the rear X-shaped assembly via the articulated joint 131. Meanwhile, an end, which is not connected to the articulated joint 131, of the first inclined beam 132 or the second inclined beam 133 is articulated to the upper bracket 104 or the lower bracket 102. It can be seen that, a double X-shaped structure formed by two X-shaped assemblies can be folded so as to reduce the occupied space.

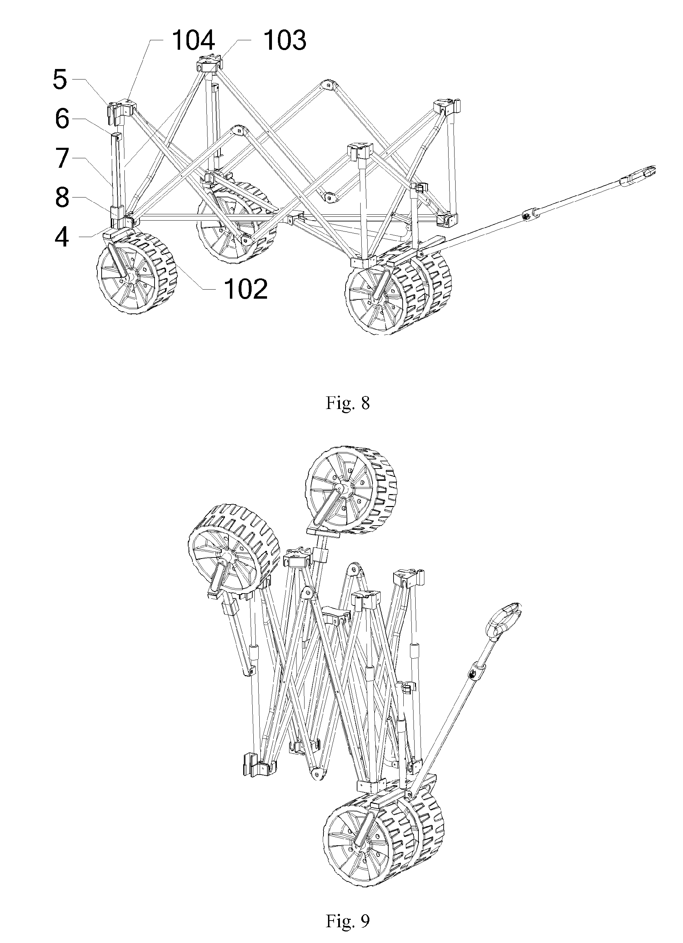

Meanwhile, as shown in Figures 8 to 10, in order to further reduce the occupied space of the beach cart after being folded, in other embodiments of the present application, the beach cart can further includes a first connecting member 4, a second connecting member 5, a third connecting member 6, a vertical beam 7 and a fourth connecting member 8.

Specifically, the first connecting member 4 is fixedly connected to the lower bracket 102, the second connecting member 5 is fixedly connected to the upper bracket 104, and the third connecting member 6 is fixedly connected to the vertical supporting leg 103 of the bottom frame 10. One end of the vertical beam 7 is articulated to the third connecting member 6, and the other end thereof is connected to a rear wheel of the wheels 3. The fourth connecting member 8 is slidably sleeved on the vertical beam 7, and when the vertical beam 7 is clamped into the first connecting member 4 or the second connecting member 5, the fourth connecting member 8 is connected to the first connecting member 4 or the second connecting member 5 so as to fix the rear wheel.

When the beach cart according to the embodiment of the present application is in using state, the rear wheel is located below the bottom frame 10, and at this point, the vertical beam 7 is clamped into the first connecting part 4, and meanwhile, the first connecting member 4 is inserted into the fourth connecting member 8 via a locating structure so as to fix the position of the rear wheel, thereby ensuring the using performance. When needs to fold the beach cart, in addition of performing the folding process of the beach cart according to the above described embodiment, the fourth connecting member 8 is lifted up along the vertical beam 7, the rear wheel connected to the vertical beam 7 is entirely turned over upwards via the third connecting member 6, then the vertical beam 7 is clamped into the second connecting member 5, and the fourth connecting member 8 is slid along the vertical beam 7 to be connected to the second connecting member 5, thereby fixing the position of the rear wheel and preventing the rear wheel from falling off. Therefore, the beach cart after being folded has a further reduced volume, requires a small storage space, and is easy to carry.

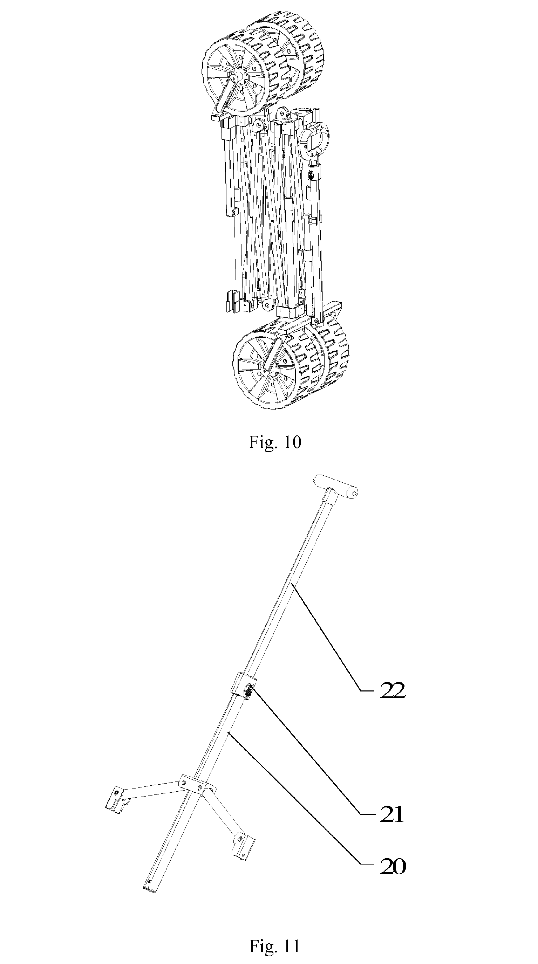

As shown in Figures 11 to 12, the handlebar 2 is arranged in front of the cart frame 1, and includes a first pull rod 20 articulated to the cart frame 1, a combined retaining member 21 arranged at a head portion of the first pull rod 20, a second pull rod 22 sleeved to the first pull rod 20, and a handgrip 23 arranged at a head portion of the second pull rod 22.

The first pull rod 20 and the second pull rod 22 are hollow aluminum pipes or hollow iron pipes, and locating holes are respectively arranged at a head portion of the first pull rod 20 and a tail portion of the second pull rod 22, and the positions of the locating holes are corresponding with each other.

The combined retaining member 21 includes a plastic member 210 sleeved on the head portion of the first pull rod 20, and a double-headed elastic pin 211 arranged in the second pull rod 22.

The double-headed elastic pin 211 is a U-shaped elastic member, and both ends of the U shape are provided with a bolt portion extending outwardly and having a length greater than a wall thickness of the second pull rod 22. By inserting the bolt portions into the locating holes, the double-headed elastic pin 211 is arranged in the second pull rod 22, and meanwhile, portions of the plug portions protruding from the second pull rod 22 can be inserted into the locating holes on the first pull rod 20.

The plastic member 210 is provided with symmetrical keys. Each of the keys is provided, at an inner surface, with a boss corresponding to the locating hole, and the boss has a diameter slightly less than a diameter of the locating hole, and a height not less than a length of the bolt portion. It can be seen that, when the keys are pressed, the bosses at inner sides of the keys may push away the double-headed elastic pin 211 inserted in the locating holes of the first pull rod 20, such that the second pull rod 22 can slide in the first pull rod 20.

Compared with the conventional beach cart, in the beach cart according to the present application, inclined supporting beams, short beams and upper cross beams are omitted, and the X-shaped assembly is only formed by inclined beams articulated with each other, such that the types and number of parts are reduced, thereby simplifying the structure of the beach cart and further reducing the probability of occurrence of failures of the beach cart.

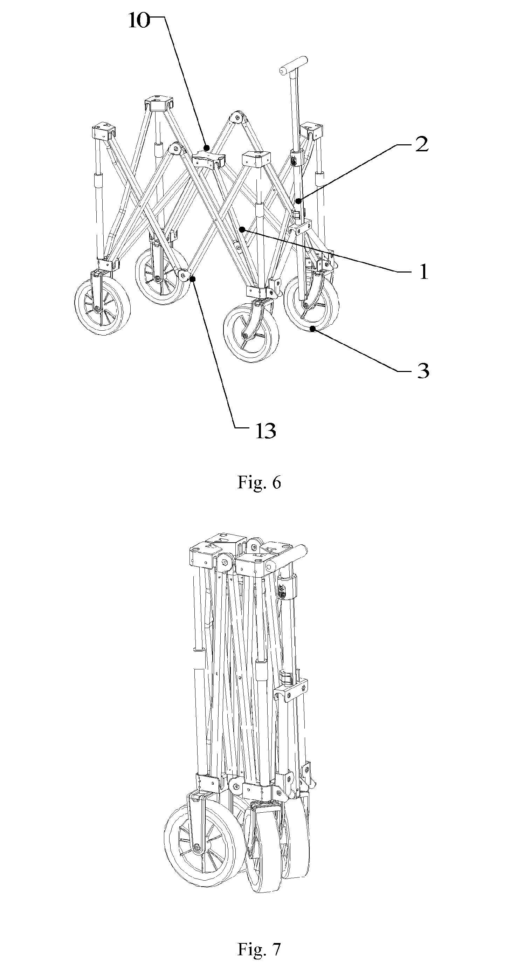

Meanwhile, when using the beach cart according to the present embodiment of the present application, the beach cart can be folded by lifting up the middle bracket 100 located on the bottom frame 10, as shown in Figure 6, and then pressing the keys on the plastic member to fold the handlebar 2, as shown in Figure 7. It is obvious that, compared with the conventional beach cart, the operation of the beach cart according to the embodiment of the present application is more convenient.

Further, each of the side frames 13 of the beach cart according to the embodiments of the present application also can be formed by three sets of X assemblies. That is, the side frame 13 includes a front X-shaped assembly, a middle X-shaped assembly, a rear X-shaped assembly and four articulated joints. The three X assemblies are arranged side by side, the front X-shaped assembly and the rear X-shaped assembly are connected via two articulated joints, and the middle X-shaped assembly and the rear X-shaped assembly are also connected via two articulated joints. It can be seen that, after adding the middle X-shaped assembly, the beach cart has a greater volume. Compared to the beach cart according to the above embodiments, the beach cart according to the present embodiment realizes an object of increasing the volume of the beach cart in the unfolded state by increasing a number of the X assemblies in the side frame 13

It can be understood by the person skilled in the art that, in the beach cart according to the present application, the side frame 13 can include more X assemblies such that the beach cart may have a greater volume.

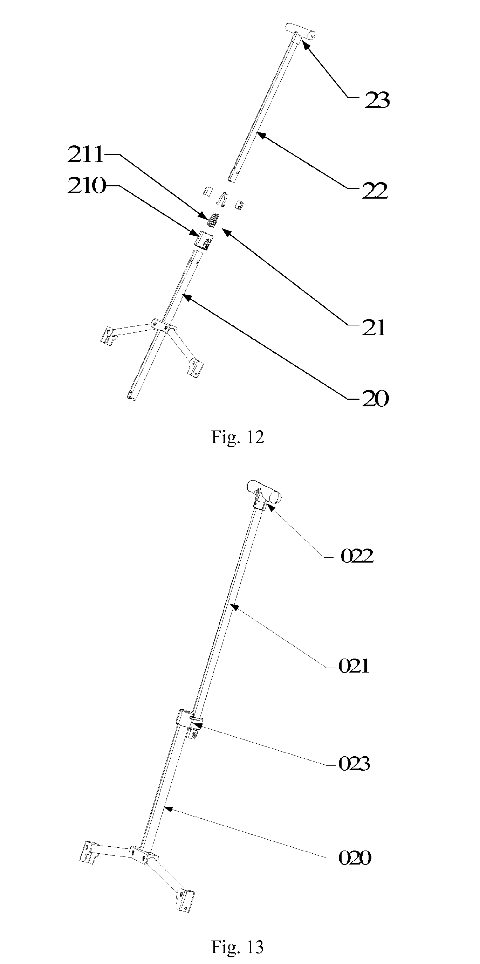

Meanwhile, based on the beach cart according to the above embodiments, in the beach cart according to the present embodiment, the handlebar 2 can also have the structure shown in Figures 13 to 16.

Referring to Figure 13, a first pull rod 020 is articulated on the cart frame 1, and is provided, at a head portion, with an articulated seat. One end of the second pull rod 021 is connected to the first pull rod 020 via the articulated seat, and the other end thereof is provided with a handgrip 022. Meanwhile, a connecting block 023 is sleeved on the second pull rod.

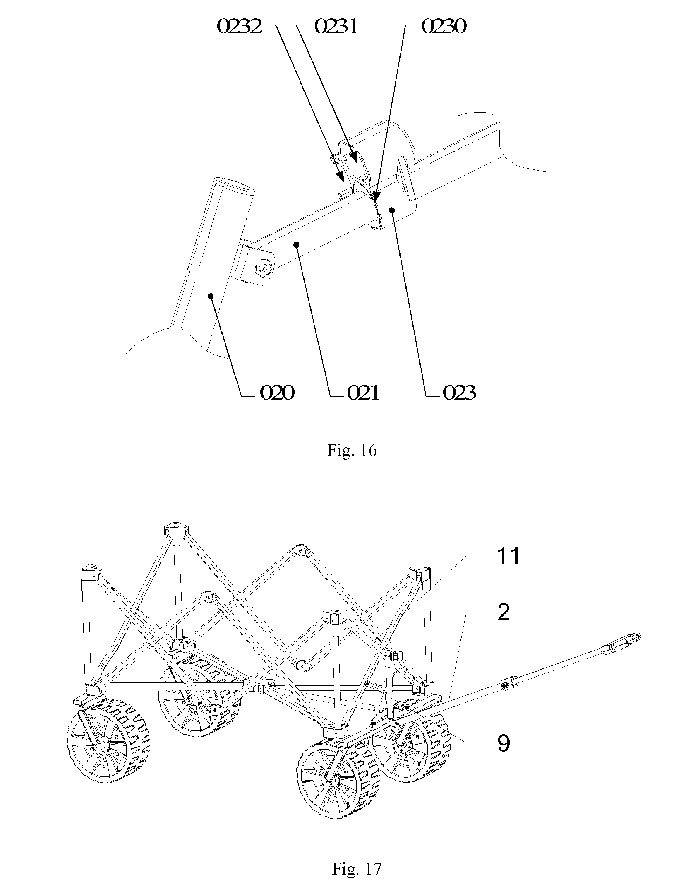

Referring to Figure 16, the connecting block 023 is provided with a through hole 0230, a blind hole 0231 and an elastic retaining groove 0232, and axes of the through hole 0230, the blind hole 0231, and the elastic retaining groove 0232 are parallel. The through hole 0230 has an inner diameter slightly greater than a diameter of the second pull rod 021, the blind hole 0231 has an inner diameter equal to a diameter of the first pull rod 0231, and the elastic retaining groove 0232 is a U-shaped groove, and two ends of an opening of the U-shaped groove curve inwardly. After being sleeved on the second pull rod 021, the connecting block 023 can rotate circumferentially and slide axially along the second pull rod 021.

As shown in Figures 13 to 15, when unfolding the beach cart according to the present embodiment, the second pull rod 021 is turned upwards and meanwhile the connecting block 023 is pressed downwardly, such that the head portion of the first pull rod 020 is sleeved in the blind hole 0231. It can be seen that, at this point, the first pull rod 020 and the second pull rod 021 are fixedly connected, a user can move the beach cart via the handgrip 022 arranged at the head portion of the second pull rod 021. When folding the beach cart, the connecting block 023 is pushed upwards to disengage the head portion of the first pull rod 020 from the blind hole 0231, and then the second pull rod 021 is turned downwards until it abuts against a side surface of the first pull rod 020, and finally, the connecting block 023 is rotated to retain the first pull rod 020 in the elastic retaining groove 0232. It can be seen that, at this point, the first pull rod 020 and the second pull rod 021 are fixedly connected via an articulated shaft and the connecting block, and a total length of the handlebar 2 is only about a half of the length when it is unfolded, thereby realizing a folding effect.

In order to further optimize the technical solution, in an embodiment of the present application, the front wheel of the beach cart can be arranged to have a detachable structure, as shown in Figure 17 to Figure 18, and specifically includes a front wheel frame fixing member 9 and a first front wheel frame 92.

The front wheel frame fixing member 9 is arranged on the front frame 11, and is of an inverted T-shaped structure. The front wheel frame fixing member 9 includes an upper end fixed on an articulated portion of the front frame 11, and a lower portion articulated, at a central position of a front side thereof, to the handlebar 2. Locking screws 91 are arranged at two ends of the lower portion of the front wheel frame fixing member 9. For avoiding losing the locking screws 91 during use, the locking screws 91 are non-detachably arranged on the front wheel frame fixing member 9 so as to connect to two first front wheel frames 92. In using, the first front wheel frames 92 are inserted into the front wheel frame fixing member 9, and then are fixed by the locking screws 91. When folding the beach cart, the front wheels can be disassembled by loosening the locking screws 91 and then pulling out the first front wheel frames 92, thus the beach cart has a reduced folded volume, a simple structure and is easy to operate.

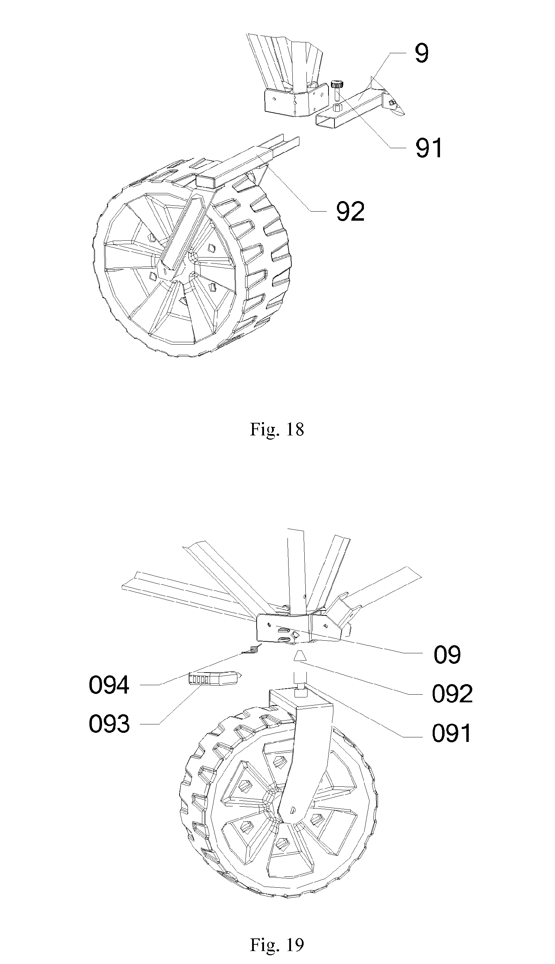

In the beach cart according to the embodiments of the present application, the front wheel can also have a detachable structure as shown in Figure 19. Specifically, a front wheel of the wheels 3 includes a second front wheel frame 092, a front wheel connecting member 09, a button 093 and a torsion spring 094.

The second front wheel frame 092 is connected to the front wheel, and has a top portion provided with a chamfer and a lower portion provided with a locating groove 091. The front wheel connecting member 09 is arranged on the lower bracket. The button 093 is arranged on the front wheel connecting member 09 for cooperating with the locating groove 091 so as to fix or release the front wheel. The torsion spring 094 is arranged on the front wheel connecting member 09 for resetting the button 093.

In the beach cart according to the present embodiment of the application, the front wheel connecting member 09, the button 093 and the torsion spring 094 are fixedly and non-detachably arranged on the lower bracket 102 connected to the front wheel. When the beach cart is in use, since the top portion of the second front wheel frame 092 is provided with a large chamfer, when the front wheel is inserted into the front wheel connecting member 09 via the second front wheel frame 092, the button 093 is pushed away automatically. After passing a certain distance, under the action of the torsion spring 094, the button 093 is automatically clamped into the locating groove 091 of the second front wheel frame 092 so as to fix the front wheel. When disassembling the front wheel, by pressing down the button 093, the button 093 will automatically exit the locating groove 091 of the second front wheel frame 092, such that the second front wheel frame 092 can automatically fall off, thereby realizing an object of disassembling the front wheel.

The above embodiments are described in a progressive manner. Each of the embodiments is mainly focused on describing its differences from other embodiments, and references may be made among these embodiments with respect to the same or similar portions among these embodiments.

Based on the above description of the disclosed embodiments, the person skilled in the art is capable of carrying out or using the present application. It is obvious for the person skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A beach cart, comprising a cart frame, a handlebar arranged in front of the cart frame, and wheels fixed at a bottom portion of the cart frame, wherein the cart frame comprises a bottom frame, a front frame arranged in front of the bottom frame, a rear frame arranged at a rear of the bottom frame, and two side frames respectively arranged at two sides of the bottom frame, wherein,
the two side frames are provided symmetrically relative to the bottom frame, and each comprises at least two sets of X-shaped assemblies which are arranged symmetrically and side by side, and a plurality of articulated joints for connecting two adjacent X-shaped assemblies at the same side; and the X-shaped assemblies each comprises a first inclined beam and a second inclined beam which are articulated via an articulated shaft arranged at middle portions of the first inclined beam and the second inclined beam;
one end of the first inclined beam is articulated to a first inclined beam of an adjacent X-shaped assembly via the articulated joint, and the other end of the first inclined beam is articulated to the front frame or the rear frame via a lower bracket of the bottom frame, or is articulated to a first inclined beam of another adjacent X-shaped assembly via the articulated joint; and
one end of the second inclined beam is articulated to a second inclined beam of the adjacent X-shaped assembly via the articulated joint, and the other end of the second inclined beam is articulated to the front frame or the rear frame via an upper bracket of the bottom frame, or is articulated to a second inclined beam of another adjacent X-shaped assembly via the articulated joint.

2. The beach cart according to claim 1, wherein each of the side frames comprises a front X-shaped assembly, a rear X-shaped assembly and two of the articulated joints, and the front X-shaped assembly is connected to the rear X-shaped assembly via the articulated joints.

3. The beach cart according to claim 1, wherein each of the side frames comprises a front X-shaped assembly, a middle X-shaped assembly, a rear X-shaped assembly and four of the articulated joints, and the front X-shaped assembly and the rear X-shaped assembly are respectively arranged at two sides of the middle X-shaped assembly via the articulated joints.

4. The beach cart according to claim 1, wherein the first inclined beam and the second inclined beam are hollow aluminum pipes or hollow iron pipes.

5. The beach cart according to claim 1, further comprising:
a first connecting member fixedly connected to the lower bracket;
a second connecting member fixedly connected to the upper bracket;
a third connecting member fixedly connected to a vertical supporting leg of the bottom frame;
a vertical beam, and one end of the vertical beam is articulated to the third connecting member, and the other end of the vertical beam is connected to a rear wheel of the wheels; and
a fourth connecting member, which is slidably sleeved on the vertical beam, and is configured to connect to the first connecting member or the second connecting member so as to fix the rear wheel, when the vertical beam is clamped into the first connecting member or the second connecting member.

6. The beach cart according to any one of claims 1 to 5, wherein,
the handlebar comprises a first pull rod articulated to the cart frame and provided, at a head portion, with a locating hole, a combined retaining member arranged on the head portion of the first pull rod, a second pull rod sleeved in the first pull rod and provided at a tail with a locating hole, and a handgrip arranged at a head portion of the second pull rod;
the combined retaining member comprises a plastic member sleeved on the head portion of the first pull rod, and a double-headed elastic pin arranged in the second pull rod;
keys are symmetrically provided on the plastic member, and each of the keys is provided, at an inner surface, with a boss corresponding to a position of the locating hole; and
the double-headed elastic pin is provided with a bolt portion which is corresponding to the position of the locating hole and has a diameter greater than a wall thickness of the second pull rod.

7. The beach cart according to any one of claims 1 to 5, wherein the handlebar comprises a first pull rod articulated to the cart frame, a second pull rod articulated on a side at a head portion of the first pull rod, a connecting block rotatably sleeved on the second pull rod, and a handgrip arranged at a head portion of the second pull rod; and
the connecting block is provided with a through hole configured for the second pull rod to pass through, a blind hole configured to be covered on the head portion of the first pull rod, and an elastic retaining groove configured to be clamped on the first pull rod.

8. The beach cart according to any one of claims 1 to 5, wherein the front frame is provided with a front wheel frame fixing member, and the front wheel frame fixing member is of an inverted T-shaped structure, comprises an upper end fixed to an articulated portion of the front frame, and a lower portion articulated to the handlebar, and two ends of the lower portion are connected to two front wheels.

9. The beach cart according to claim 8, wherein locking screws are arranged at the two ends of the lower portion of the front wheel frame fixing member for connecting to two first front wheel frames.

10. The beach cart according to any one of claims 1 to 5, wherein a front wheel of the wheels comprises:
a second front wheel frame which is connected to the front wheel, comprises a top portion provided with a chamfer and a lower portion provided with a locating groove;
a front wheel connecting member arranged on the lower bracket;
a button arranged on the front wheel connecting member for cooperating with the locating groove so as to fix and release the front wheel; and
a torsion spring arranged on the front wheel connecting member for resetting the button.
